# DEMANDE DE BREVET EUROPEEN

(11) **EP 1 674 429 A1**
(43) Date de publication de la demande: **28.06.2006**
(21) Numéro de dépôt: 04293129.5
(22) Date de dépôt: 24.12.2004
(51) Int. Cl.: C02F 3/04, C02F 3/32

(54) **Dispositif d'épuration d'eaux usées et utilisations**

(71) Demandeur: Epur Nature, 84400 Gargas (FR)
(72) Inventeur: Pietri, Christian, 13840 Rognes (FR); Leboeuf, Vincent, 84740 Velleron (FR); Esser, Dirk, 73370 La Chapelle du Mont du Chat (FR)
(74) Mandataire: Becker, Philippe

(57) **Abrégé**

La présente invention concerne un dispositif d'épuration d'eaux usées comprenant (i) un moyen destiné à filtrer les eaux usées comprenant une couche C2 de matériau particulaire et une couche C1 de matériau particulaire située directement au-dessus d'elle, la granulométrie de la couche C2 étant inférieure à la granulométrie de la couche C1 et (ii) un moyen permettant la diffusion d'air ou d'oxygène disposé à l'interface entre lesdites couches C1 et C2. L'invention concerne également une station d'épuration et un procédé d'épuration d'eaux usées mettant en oeuvre un tel dispositif.

## Description

Le domaine de la présente invention est celui du traitement des eaux usées, notamment domestiques ou industrielles. Plus particulièrement, l'invention concerne un dispositif d'épuration des eaux usées comprenant plusieurs couches successives de matériaux particulaires, notamment une couche de sable ou analogue, et un moyen permettant la diffusion d'air ou d'oxygène disposé à la surface de ladite couche de sable et destiné à éviter son colmatage. Elle concerne également une station d'épuration et un procédé d'épuration d'eaux usées mettant en oeuvre un tel dispositif.

Les dispositifs décrits dans l'art antérieur pour le traitement des eaux usées sont essentiellement constitués de deux filtres distincts fonctionnant en série, constituant respectivement un premier et un deuxième étage de traitement dont les différentes couches présentent une granulométrie croissante du haut vers le bas (cf. Etude bibliographique agence de l'eau RMC 1999 ; Document n°22 du FNDAE). Les filtres sont alimentés par bâchée. Les caractéristiques principales des deux étages, rappelées ci-dessous, sont bien connues et abondamment décrites.

Le filtre type premier étage permet de combiner un traitement primaire à un début de traitement secondaire. Le traitement primaire consiste en une filtration physique et en une stabilisation aérobie (sur la surface) des matières en suspension filtrées. Le traitement secondaire consiste en une dégradation de la pollution dissoute à l'intérieur du filtre.
Le filtre type premier étage est constitué de couches de granulométries successives différentes croissantes du haut (la surface du filtre) vers le bas (le fond du filtre). Il comprend généralement une couche supérieure de gravier de granulométrie 1/10 mm et de 0,40 m à 1 m d'épaisseur. Cette couche comprend parfois une aération intermédiaire constituée de drains munis de fentes tournées vers le bas. En dessous de la première couche décrite ci-dessus sont disposées une succession de une ou plusieurs couches de granulométrie croissante (couche de gravier de granulométrie 10/20 mm ou 15/25 mm par exemple et d'environ 0,2 m d'épaisseur). Ce filtre comprend enfin, en-dessous des couches précédentes, une couche de gravier de granulométrie 20/40 à 30/60 mm. Un système de drainage communique avec l'atmosphère par un système de cheminées remontant à la surface du filtre.

Le filtre type deuxième étage permet d'améliorer la qualité du rejet en sortie du filtre de type premier étage. Le deuxième étage est constitué de couches de granulométrie plus fine. Une première couche de sable de granulométrie 0/6 mm et de 0,20 à 0,40 m d'épaisseur, est toujours disposée en surface, à l'air libre, de façon à avoir une oxygénation maximale du massif filtrant et une dégradation aérobie des dépôts organiques non retenus sur le filtre de type premier étage. C'est sur cette couche de sable que s'effectue l'essentiel de la filtration complémentaire. Une aération intermédiaire (drains munis de fentes tournées vers le bas) est parfois située entre la couche de sable et une couche inférieure de gravier de granulométrie supérieure à celle du sable. Cette couche de gravier, généralement de granulométrie 1/10 mm, a une épaisseur de 0,10 m à 0,40 m. En dessous de cette dernière couche sont disposées une succession de une ou plusieurs couches de granulométrie croissante (couche de gravier de granulométrie 10/20 mm ou 15/25 mm), et, en-dessous des couches précédentes, une couche de gravier de granulométrie 20/40 à 30/60 mm. Un système de drainage communique avec l'atmosphère par des cheminées remontant à la surface du filtre.

Les demandes de brevet français FR2801805 et internationale WO 00/10927 décrivent des exemples de filtres de ce type, utilisés dans l'art antérieur.

La demande de brevet WO 00/10927 décrit une cellule de filtration-compostage dont la surface est plantée de roseaux et qui comporte des couches successives de matériaux de remplissage et de sable (couche de cailloux recouverte d'une couche de gravier et d'une couche de sable). Les effluents, avant de traverser la cellule de filtration-compostage, sont pré-traités via un dégrillage fin (maille 3 mm) ou un tamisage (maille 6 mm) permettant d'éliminer les déchets divers.

La demande de brevet français FR2801805 décrit un dispositif d'épuration des eaux usées par filtration-percolation de type massif filtrant permettant le traitement d'eaux usées avec une réduction des émissions d'odeurs gênantes et une réduction de l'espace occupé. Ce dispositif comprend un moyen pour filtrer les eaux usées, un moyen de couverture amovible, formant barrière anti-odeur, laissant passer au moins en partie le rayonnement solaire à l'intérieur du dispositif, et disposé au-dessus du moyen pour filtrer les eaux usées, et un moyen de circulation d'air à travers le moyen pour filtrer les eaux usées. Le moyen pour filtrer les eaux usées comprend une couche inférieure de gravier pour le drainage des effluents et l'aération, une couche intermédiaire de gravier plus fin que celui de la couche inférieure pour l'aération et la nitrification et une couche supérieure de sable pour la fixation des bactéries. Le moyen de circulation d'air est situé entre la couche de sable (couche supérieure) et la couche intermédiaire et communique avec l'espace formé sous le moyen de couverture (cf. Fig. 3 de FR2801805).

La demande de brevet français FR2690683 décrit un filtre de type premier étage intégrant une couche de sable. Au contraire des filtres décrits ci-dessus, la couche de sable n'est pas disposée à la surface du filtre. La couche de sable représente 60% en volume des matériaux de remplissage, les 4 autres couches représentant respectivement 10% de ce volume. La couche la plus basse est une couche drainante à base de galets. Une aération supplémentaire facultative est parfois prévue. Elle est constituée d'un conduit enterré dans les couches de remplissage qui n'aère pas la couche de sable.

Ainsi, FR2690683 concerne une installation d'épuration biologique d'eaux résiduaires, et en particulier d'élimination de la pollution azotée comprenant des réacteurs (R1 et R2 au moins) constitués par des bassins d'infiltration dans lesquels sont plantés des végétaux supportant une partie de la biomasse fermentaire utile. Les réacteurs sont agencés en terrasses ou en étages, de manière à exploiter la gravité pour la circulation des fluides. Le réacteur R1 comprend 4 à 5 couches superposées, la deuxième couche (du haut vers le bas du dispositif) étant une couche de sable. La Figure 2 de FR2690683 représente une installation d'épuration comprenant un conduit d'oxygénation et d'aération (présenté comme facultatif dans la description) enterré sous les couches de remplissage de R1. Le colmatage de la couche de sable est un problème fréquemment rencontré lors de la mise en oeuvre de ce type d'installation et qui exige un travail mécanique et un remplacement relativement fréquent des couches de surface.

Les inventeurs ont constaté que le colmatage survenant lors de l'utilisation d'une installation semblable au dispositif décrit FR2690683 se produit au niveau de l'interface entre la partie inférieure d'une couche de granulométrie donnée et la surface de la couche de sable de granulométrie inférieure située en dessous.

L'invention se propose de remédier aux carences et aux imperfections de l'art antérieur et a notamment pour objet de fournir un dispositif d'épuration d'eaux usées économique, efficace en terme de filtration et dans lequel le colmatage de la couche de sable (ou analogue) est limité ou ne se produit pas.

Le dispositif selon l'invention est économique dans la mesure où il n'impose pas de disposer d'une surface de terrain étendue au contraire des dispositifs se présentant sous la forme d'étages, éventuellement disposés en terrasses, utilisés dans l'art antérieur. Ces étages sont en effet remplacés, dans le cadre de l'invention, par un dispositif se présentant sous la forme d'une unité de traitement. La présence de plusieurs unités n'est pas obligatoire. L'efficacité de filtration des effluents du dispositif selon l'invention est au moins semblable à celle obtenue en combinant un filtre de type premier étage avec un filtre de type deuxième étage et bien supérieure à celle d'un filtre de type premier étage isolé.

L'invention concerne ainsi un dispositif d'épuration d'eaux usées, de type massif filtrant, comprenant (i) un moyen destiné à filtrer les eaux usées comprenant une couche C2 de matériau particulaire et une couche C1 de matériau particulaire située directement au-dessus de ladite couche C2, la granulométrie de la couche C2 étant inférieure à la granulométrie de la couche C1 et (ii) un moyen permettant la diffusion d'air ou d'oxygène disposé à l'interface entre lesdites couches C1 et C2, et destiné, en réduisant ou en supprimant les conditions anaérobies, à éviter le colmatage de la couche C2.

Une caractéristique importante de l'invention réside dans le fait que la couche C2 n'est pas disposée à la surface du dispositif.

L'invention concerne par ailleurs une station d'épuration comprenant un dispositif selon l'invention.

L'invention concerne aussi un procédé de traitement d'eaux usées mettant en oeuvre un dispositif selon l'invention.

### DESCRIPTION DETAILLEE DE L'INVENTION

L'invention concerne un dispositif d'épuration d'eaux usées, de type massif filtrant, comprenant (i) un moyen destiné à filtrer les eaux usées comprenant une couche C2 de matériau particulaire et une couche C1 de matériau particulaire située directement au-dessus d'elle, la granulométrie de la couche C2 étant inférieure à la granulométrie de la couche C1 et (ii) un moyen permettant la diffusion d'air ou d'oxygène disposé à l'interface entre lesdites couches C1 et C2.

L'intérêt de l'invention est d'obtenir un niveau de rejet des impuretés au moins semblable à celui obtenu en combinant un filtre de type premier étage avec un filtre de type deuxième étage tout en évitant le colmatage du sable ou de la couche utilisée à la place du sable. Le dispositif selon l'invention constitue une unité de traitement. Il ne nécessite pas l'intervention de zones distinctes séparées, éventuellement disposées en étages ou en terrasses et requérant une surface importante. Il est donc plus facile à construire et à mettre en oeuvre.

Le moyen destiné à filtrer les eaux usées comprend plusieurs couches, de préférence au moins 2, 3, 4 ou 5 couches. Les couches sont par exemple constituées de tout matériau particulaire, de nature minérale ou chimique, tel que du sable, du gravier, des galets ou analogues. Le matériau est choisi en fonction de la granulométrie souhaitée. Une caractéristique importante de l'invention réside dans le fait que la couche C2 dont la granulométrie est la plus faible, n'est pas disposée en surface.

L'invention concerne plus particulièrement un dispositif d'épuration d'eaux usées, de type massif filtrant, caractérisé en ce qu'il comprend (i) un moyen pour filtrer les eaux usées comprenant des couches de granulométrie successives différentes organisées du haut vers le bas de la façon suivante :
- une couche C1 de matériau particulaire,
- une couche C2 de matériau particulaire de granulométrie inférieure à la granulométrie de la couche C1,
- éventuellement, une couche C3 de matériau particulaire de granulométrie identique à la granulométrie de la couche C1 ou supérieure,
- éventuellement, une couche C4 de matériau particulaire de granulométrie supérieure à la granulométrie de la couche C3 (ou de la couche C1 si la couche C3 est absente), et
- éventuellement, une couche C5 de matériau particulaire de granulométrie supérieure à la granulométrie de la couche C4,
et (ii) un moyen permettant la diffusion d'air ou d'oxygène compris entre la couche C1 et la couche C2.

Le moyen (i) destiné à filtrer les eaux usées comprend au moins 2 ou 3 couches, de préférence au moins 4 couches, encore plus préférentiellement au moins 5 couches. Les couches peuvent être constituées, comme indiqué précédemment, de sable, gravier, galets ou analogues par exemple, en fonction de la granulométrie souhaitée. La couche C2 n'est jamais disposée en surface.

La première couche C1 peut comprendre un matériau particulaire ayant une granulométrie d'environ 1/10 mm, éventuellement 2/10 mm, 2/6 mm ou 3/8 mm. Par « couche de granulométrie d'environ 1/10 mm », il faut comprendre, au sens de la présente invention, une couche constituée de matériau particulaire contenant un mélange de particules dont le diamètre ou la taille peut être hétérogène d'une particule à l'autre, et est compris entre 1 et 10 mm. La couche C1 est avantageusement constituée de gravier ou d'un analogue. Son épaisseur est comprise entre environ 0,05 m et environ 1 m de préférence entre environ 0,20 m et environ 0,6 m.

L'épaisseur de la couche C2 est comprise entre environ 0,1 m et environ 1m, de préférence entre environ 0,15 m et environ 0,4 m. La granulométrie du matériau particulaire constitutif de la couche C2 est généralement comprise entre 0 et 8 mm. Elle est de préférence d'environ 0/6 mm, 1/6 mm, 1/5 mm, 0/4 mm, voire 0/2 mm. Cette couche est avantageusement constituée de sable ou d'un analogue.

L'épaisseur des couches situées en dessous de la couche C2 décrite ci-dessus (e.g., C3, C4, C5 dans le dispositif décrit ci-dessus) est comprise entre environ 0,10 m et environ 0,5 m, 1m, voire 2m, de préférence entre environ 0,10 m et environ 0,4 m. Ces couches sont généralement constituées de matériaux particulaires ayant une granulométrie d'environ 10/80 mm. La granulométrie d'une même couche peut être d'environ 10/20 mm, 15/25 mm, 20/40mm, 30/60 mm ou 40/80 mm . La granulométrie des couches situées sous C2 est croissante du haut vers le bas (fond du dispositif). Ces couches sont avantageusement constituées de graviers, galets ou analogue.

La granulométrie, la nature chimique et l'épaisseur des couches successives ainsi que le gradient de leur taille sont fonction du type d'effluent à traiter et sont susceptibles d'être facilement choisis par l'homme du métier.

Un dispositif particulier d'épuration d'eaux usées, de type massif filtrant, selon l'invention, comprend (i) un moyen pour filtrer les eaux usées comprenant des couches de granulométrie successives différentes organisées du haut vers le bas de la façon suivante :
- une couche C1 de gravier ou analogue de granulométrie d'environ 1/10 mm,
- une couche C2 de sable ou analogue de granulométrie d'environ 0/6 mm,
- éventuellement, une couche C3 de gravier ou analogue identique à la première couche C1,
- éventuellement, une couche C4 de gravier ou analogue de granulométrie d'environ 10/25 mm, de préférence d'environ 10/20 mm ou d'environ 15/25 mm, et
- éventuellement, une couche C5 de gravier ou analogue de granulométrie d'environ 20/60 mm, de préférence d'environ 20/40 mm ou d'environ 30/60 mm, et
   (ii) un moyen permettant la diffusion d'air ou d'oxygène compris entre la couche C1 de gravier ou analogue et la couche C2 de sable ou analogue.

Le moyen permettant la diffusion d'air ou d'oxygène (ii) peut être passif ou actif (air ou oxygène injecté sous pression), continu ou alternatif, et recouvre tout ou partie de la couche C2. II permet de créer, à la surface de la couche intermédiaire C2 dont la granulométrie est inférieure à la granulométrie de la couche C1 située directement au-dessus d'elle, des conditions d'aération les plus proches possibles de l'atmosphère. Il peut s'agir d'un système d'aération communiquant avec l'atmosphère via une ou plusieurs cheminée(s) remontant à la surface du dispositif d'épuration.

Un ou des moyens de diffusion d'air ou d'oxygène supplémentaires peuvent également être présents dans la couche C2 ou sous cette dernière.

Comme indiqué ci-dessus, le moyen permettant la diffusion d'air ou d'oxygène peut être un moyen actif, e.g., il peut être avantageusement équipé d'un système d'injection d'air ou d'oxygène sous pression (par exemple alimenté par un compresseur etc.) ou d'un ventilateur le moyen permettant la diffusion d'air ou d'oxygène peut également être un réseau sous pression (donc ne communicant pas forcément avec l'atmosphère) alimenté par un compresseur ou un surpresseur. Ce système peut être asservi à une horloge, une sonde à oxygène, une sonde redox etc.

Le moyen permettant la diffusion d'air ou d'oxygène peut être choisi, par exemple, parmi une couche de granulométrie supérieure à la granulométrie de la couche C2 et de préférence également supérieure à la granulométrie de la couche C1, un drain agricole, un drain routier, un tuyau fendu ou percé, un plancher creux, un caisson creux et une structure alvéolaire, etc. Les tuyaux utilisés pourront être en PVC, polyéthylène, polypropylène, inox ou tout autre matériau.

Le dispositif décrit ci-dessus peut en outre comprendre un moyen d'injection d'air ou d'oxygène sous pression pour décolmater la surface de la couche C2 (avantageusement constituée de sable) et améliorer l'apport d'air ou d'oxygène. Un tel dispositif peut s'avérer utile après une utilisation intensive du dispositif selon l'invention et/ou pour nettoyer le moyen (ii) permettant la diffusion d'air ou d'oxygène.

La surface du dispositif selon l'invention peut avantageusement être plantée de roseaux, par exemple *Phragmitis australis,* qui ont à la fois :
- un effet de déshydratation des boues par évapotranspiration,
- un effet de floculation des matières organiques dissoutes,
- un effet mécanique de décolmatage par les rhizomes,
- un effet d'oxygénation et de contrôle de la microflore dans le massif.
   Ces roseaux assurent l'oxygénation de l'effluent en surface.

Le dispositif selon l'invention peut également comprendre, outre les couches décrites précédemment, une couche de nature organique, compost ou boues de station d'épuration par exemple, située à la surface de la première couche C1. Une telle couche organique se forme naturellement après la mise en route du dispositif selon l'invention grâce au dépôt provenant des eaux usées. II est néanmoins possible de la constituer artificiellement dès le démarrage de l'installation afin d'améliorer le pouvoir filtrant de la couche C1. Cette couche possède une épaisseur comprise entre environ 0,05 m et 0,5 m, de préférence entre environ 0,05 m et 0,2 m.

Un autre objet de l'invention concerne une station d'épuration comprenant un dispositif selon l'invention tel que décrit précédemment.

A l'intérieur de la station d'épuration, le dispositif selon l'invention peut être présent à raison de plus d'une unité, de préférence à raison de 2 ou 3 unités, qui fonctionnent en alternance. Le dispositif peut être alimenté par bâchées successives. Il est préférentiellement alimenté par le dessus en effluents et équipé d'un réseau de drainage en fond. Les effluents peuvent avantageusement être préalablement dégrillés avec une maille comprise par exemple entre 10 et 40 mm.

Un autre objet de l'invention concerne un procédé de traitement d'eaux usées mettant en oeuvre un dispositif selon l'invention tel que décrit précédemment.

D'autres aspects et avantages de la présente invention apparaîtront à la lecture de la description faite ci-dessous en référence aux dessins annexés qui montrent, à titre d'exemples illustratifs et non limitatifs, des formes de réalisation de l'objet de l'invention.

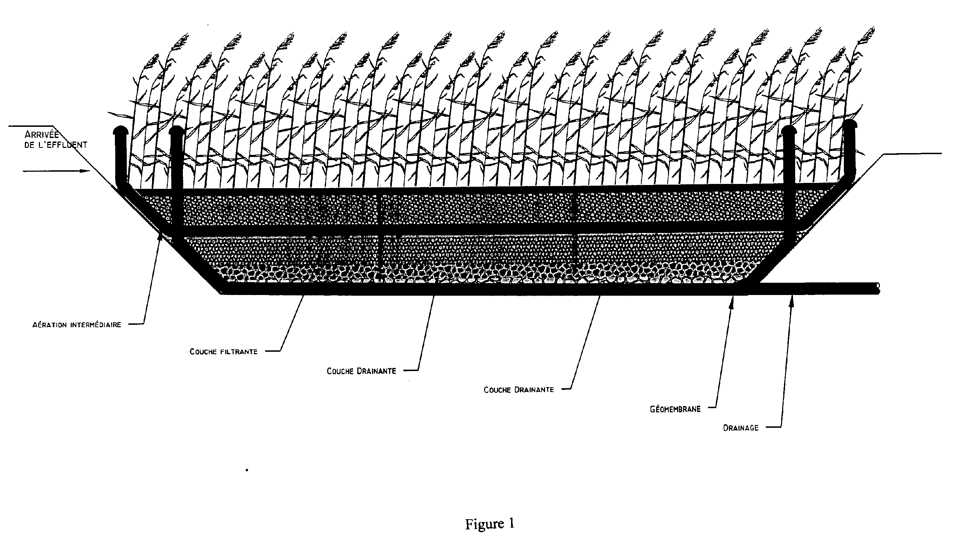

La Figure 1 est une coupe d'un filtre type premier étage comprenant une aération intermédiaire.

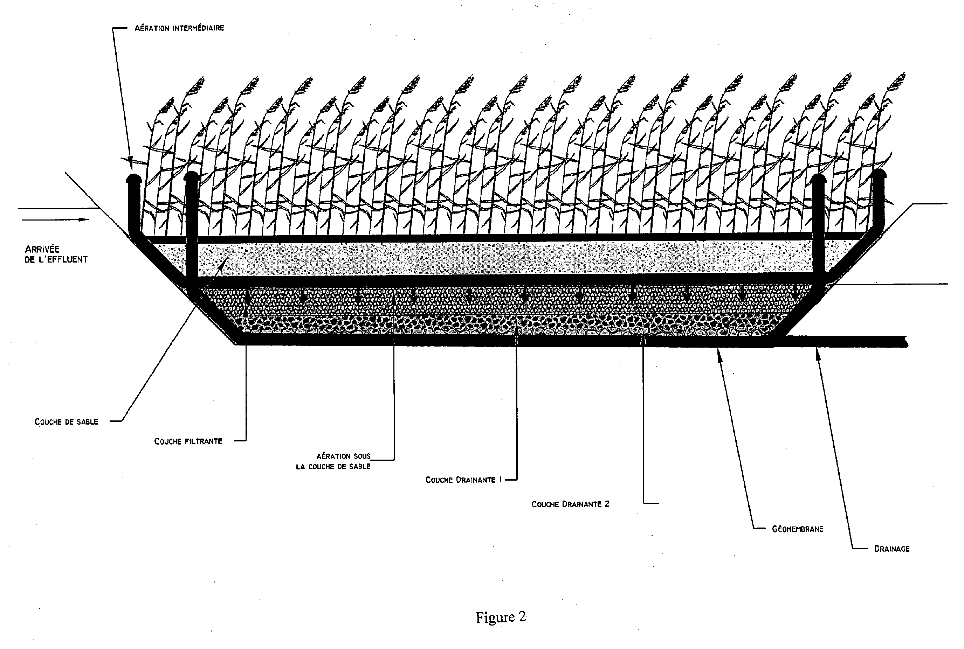

La Figure 2 est une coupe d'un filtre type deuxième étage comprenant une aération intermédiaire.

La Figure 3 est une coupe d'un dispositif d'épuration d'eaux usées conforme à l'invention.

La Figure 4 est une coupe d'un dispositif d'épuration d'eaux usées conforme à l'invention.

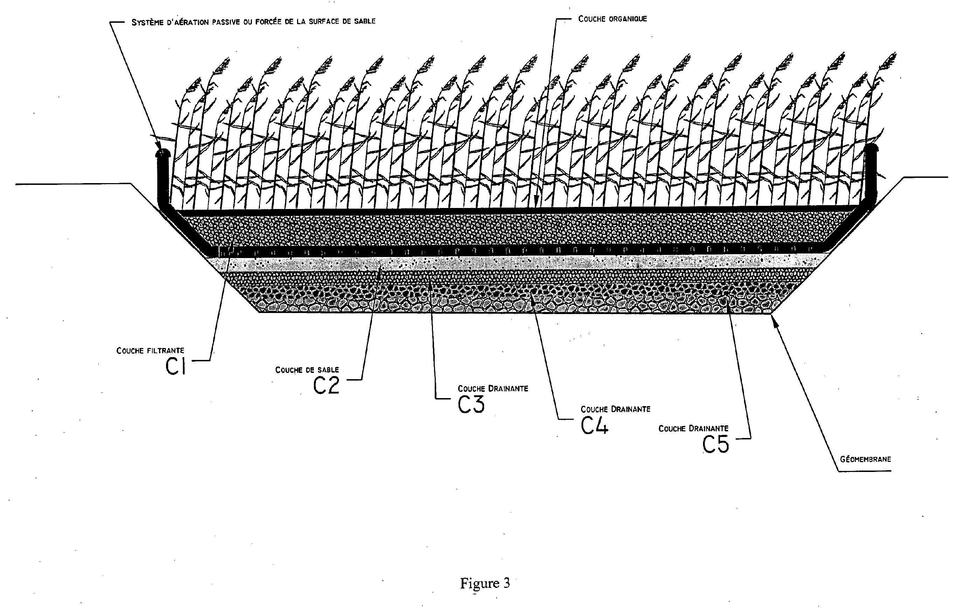

Dans l'exemple de réalisation montré à la Figure 3, le dispositif d'épuration d'eaux usées, de type massif filtrant, conforme à l'invention comprend (i) un moyen pour filtrer les eaux usées comprenant des couches de granulométrie successives différentes organisées du haut vers le bas de la façon suivante :
- une première couche C1 de gravier de granulométrie d'environ 1/10 mm,
- une deuxième couche C2 de sable de granulométrie d'environ 0/6 mm,
- une troisième couche C3 de gravier identique à la première couche C1,
- une quatrième couche C4 de gravier de granulométrie d'environ 10/20 mm ou 15/25 mm,
- une cinquième couche C5 de gravier de granulométrie d'environ 20/40 mm ou d'environ 30/60 mm, et
   (ii) un moyen permettant la diffusion d'air ou d'oxygène compris entre la première couche de gravier C1 et la couche de sable C2.
   La surface du dispositif est plantée de roseaux. Le dispositif comprend en outre une couche de nature organique disposée à la surface de la première couche C1 de gravier de 0,05 à 0,2 m d'épaisseur.

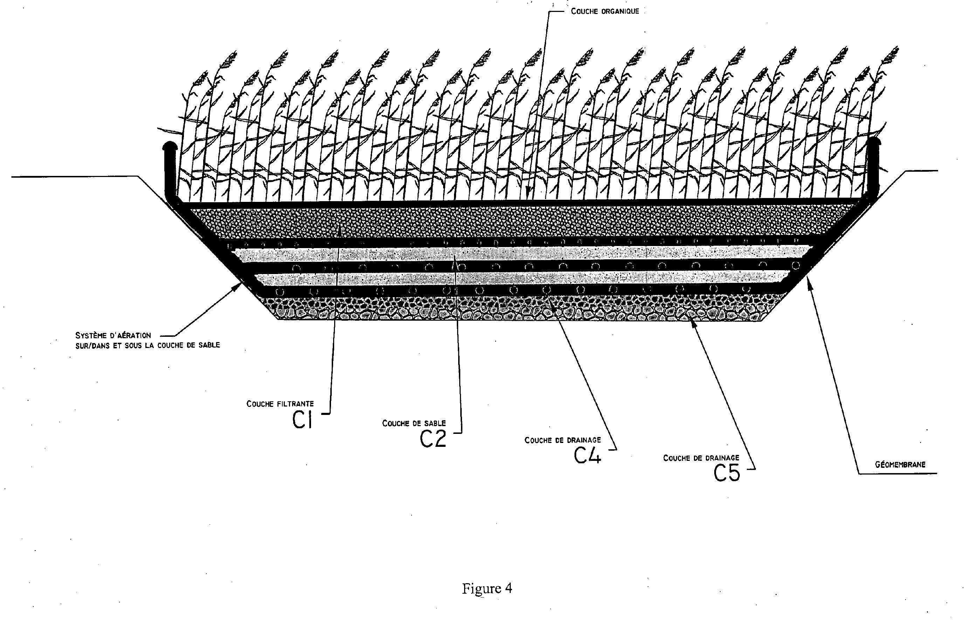

Dans l'exemple de réalisation montré à la Figure 4, le dispositif d'aération est disposé à la fois à la surface, à l'intérieur et sous la couche de sable C2. Le reste du dispositif se distingue du dispositif représenté sur la figure 3 en ce qu'il ne comprend pas de couche de type C3 (telle que décrite ci-dessus).

## Revendications

1. Dispositif d'épuration d'eaux usées, de type massif filtrant, comprenant (i) un moyen destiné à filtrer les eaux usées comprenant une couche C2 de matériau particulaire et une couche C1 de matériau particulaire située directement au-dessus de ladite couche C2, la granulométrie de la couche C2 étant inférieure à la granulométrie de la couche C1 et (ii) un moyen permettant la diffusion d'oxygène disposé à l'interface entre lesdites couches C1 et C2.

2. Dispositif d'épuration d'eaux usées selon la revendication 1, **caractérisé en ce que** le moyen (i) pour filtrer les eaux usées comprend des couches de granulométrie successives différentes organisées du haut vers le bas de la façon suivante :
- une couche C1 de matériau particulaire,
- une couche C2 de matériau particulaire de granulométrie inférieure à la granulométrie de la couche C1,
- éventuellement, une couche C3 de matériau particulaire de granulométrie identique à la granulométrie de la couche C1 ou supérieure,
- éventuellement, une couche C4 de matériau particulaire de granulométrie supérieure à la granulométrie de la couche C3, et
- éventuellement, une couche C5 de matériau particulaire de granulométrie supérieure à la granulométrie de la couche C4,
et **en ce que** le moyen (ii) permettant la diffusion d'air ou d'oxygène est compris entre la couche C1 et la couche C2.

3. Dispositif d'épuration d'eaux usées selon la revendication 2, **caractérisé en ce que** la couche C1 comprend un matériau particulaire ayant une granulométrie d'environ 1/10 mm, de préférence des graviers, galets ou analogues.

4. Dispositif d'épuration d'eaux usées selon la revendication 2 ou 3, **caractérisé en ce que** la couche C2 comprend un matériau particulaire ayant une granulométrie d'environ 0/6 mm.

5. Dispositif d'épuration d'eaux usées selon la revendication 4, **caractérisé en ce que** la couche C2 est constituée de sable ou analogue.

6. Dispositif d'épuration d'eaux usées selon l'une quelconque des revendications 2 à 5, **caractérisé en ce que** la couche C4 comprend un matériau particulaire ayant une granulométrie d'environ 10/25 mm, de préférence d'environ 10/20 mm ou d'environ 15/25 mm, de préférence des graviers, galets ou analogues.

7. Dispositif d'épuration d'eaux usées selon l'une quelconque des revendications 2 à 6, **caractérisé en ce que** la couche C5 comprend un matériau particulaire ayant une granulométrie d'environ 20/60 mm, de préférence d'environ 20/40 mm ou d'environ 30/60 mm, de préférence des graviers, galets ou analogues.

8. Dispositif selon l'une quelconque des revendications 1 à 7, **caractérisé en ce que** le moyen permettant la diffusion d'air ou d'oxygène est un système d'aération communiquant avec l'atmosphère via une ou plusieurs cheminée(s) remontant à la surface du dispositif.

9. Dispositif selon l'une quelconque des revendications 1 à 8, **caractérisé en ce que** le moyen permettant la diffusion d'air ou d'oxygène est équipé d'un filtre.

10. Dispositif selon l'une quelconque des revendications 1 à 9, **caractérisé en ce que** le moyen permettant la diffusion d'oxygène comprend un ventilateur ou un système d'injection d'air ou d'oxygène alimenté par un compresseur.

11. Dispositif selon l'une des revendications 8 à 10, **caractérisé en ce que** le moyen permettant la diffusion d'air ou d'oxygène est choisi parmi une couche de granulométrie supérieure à la granulométrie de la couche C2 et de préférence également supérieure à la granulométrie de la couche C1, un drain agricole, un drain routier, un tuyau fendu ou percé, un plancher creux, un caisson creux et une structure alvéolaire.

12. Dispositif selon l'une quelconque des revendications 5 à 11, **caractérisé en ce qu'**il comprend en outre un moyen d'injection d'air sous pression pour décolmater la surface du sable et améliorer l'apport d'air ou d'oxygène.

13. Dispositif selon l'une quelconque des revendications précédentes, **caractérisé en ce que** l'épaisseur de la couche C1 est comprise entre environ 0,20 m et environ 0,6 m.

14. Dispositif selon l'une quelconque des revendications précédentes, **caractérisé en ce que** l'épaisseur de la couche C2 est comprise entre environ 0,15 m et environ 0,4 m.

15. Dispositif selon l'une quelconque des revendications 2 à 14, **caractérisé en ce que** l'épaisseur des couches C3, C4 et C5 est comprise entre environ 0,10 m et environ 0,4 m.

16. Dispositif selon l'une quelconque des revendications précédentes, **caractérisé en ce que** la surface du dispositif est plantée de roseaux.

17. Dispositif selon l'une quelconque des revendications précédentes, **caractérisé en ce que** le dispositif comprend en outre une couche de nature organique à la surface de la couche C1.

18. Station d'épuration **caractérisée en ce qu'**elle comprend un dispositif selon l'une quelconque des revendications 1 à 17.

19. Procédé de traitement d'eaux usées mettant en oeuvre un dispositif selon l'une quelconque des revendications 1 à 17.
